# EUROPÄISCHE PATENTSCHRIFT

(11) **EP 1 355 751 B1**
(45) Veröffentlichungstag und Bekanntmachung des Hinweises auf die Patenterteilung: **09.05.2007**
(21) Anmeldenummer: 02700140.3
(22) Anmeldetag: 08.01.2002
(51) Int. Cl.: B21K 1/76, B21K 21/08, B21C 23/20

(54) **VERFAHREN ZUR HERSTELLUNG EINES KUGELGELENKGEHÄUSES**
METHOD FOR PRODUCING A HOUSING FOR A BALL JOINT
PROCEDE DE FABRICATION D'UN BOITIER DE JOINT A ROTULE

(30) Priorität: 09.01.2001 DE 10100668
(43) Veröffentlichungstag der Anmeldung: 29.10.2003
(73) Patentinhaber: ZF Lemförder Metallwaren AG, 49441 Lemförde (DE)
(72) Erfinder: ROSENBERGER, Klaus, 47800 Krefeld (DE); THÖLKING, Markus, 49377 Vechta (DE); SCHELLACK, Detlef, 49201 Dissen (DE)
(86) Internationale Anmeldenummer: PCT/DE2002/000023
(87) Internationale Veröffentlichungsnummer: WO 2002/055232

(56) Entgegenhaltungen:
- DE-A- 3 705 426
- DE-A- 19 536 035
- PATENT ABSTRACTS OF JAPAN vol. 015, no. 416 (M-1172), 23. Oktober 1991 (1991-10-23) -& JP 03 176275 A (NIPPON SEIKO KK), 31. Juli 1991 (1991-07-31)
- PATENT ABSTRACTS OF JAPAN vol. 009, no. 158 (M-393), 3. Juli 1985 (1985-07-03) -& JP 60 033848 A (NAKAMURA SEISAKUSHO:KK), 21. Februar 1985 (1985-02-21)
- PATENT ABSTRACTS OF JAPAN vol. 016, no. 229 (M-1255), 27. Mai 1992 (1992-05-27) -& JP 04 046652 A (NGK SPARK PLUG CO LTD), 17. Februar 1992 (1992-02-17)
- PATENT ABSTRACTS OF JAPAN Bd. 1998, Nr. 06, 30. April 1998 (1998-04-30) -& JP 10 034276 A (MUSASHI SEIMITSU IND CO LTD), 10. Februar 1998 (1998-02-10)

## Beschreibung

Die Erfindung betrifft ein Verfahren zur Herstellung eines Kugelgelenkgehäuses durch Kaltumformung.

Kugelgelenke werden in der Kraftfahrzeugindustrie insbesondere für Spurstangen oder in Radaufhängungen eingesetzt, wo sie über einen sehr langen Lebensdauerzyklus des Kraftfahrzeuges zum Teil extremen Witterungseinflüssen sowie mechanischen oder chemischen Belastungen standhalten müssen.
Diesen Erfordernissen läuft das zunehmende Bedürfnis entgegen, Kugelgelenke gewichtsparend zu konstruieren. In der Praxis ist es bekannt, Kugelgelenkgehäuse aus einem aus Drahtmaterial bestehenden Rohling herzustellen, der nach seiner Erwärmung in mehreren aufeinanderfolgenden Schritten zu einem Gelenkgehäuse geschmiedet wird. Dieses energie- und arbeitsintensive Verfahren ermöglicht zwar die Herstellung hochfester Kugelgelenkgehäuse, allerdings weisen Schmiedebauteile stets auch den Nachteil eines sehr hohen Eigengewichtes auf.

Aus der DE 195 36 035 A1 ist ein Verfahren zur Herstellung eines Gelenkgehäuses für Kugelgelenke bekannt geworden, das insgesamt durch Kaltumformung herstellbar ist. Mittels Napfrückwärtsfließpressens wird in den Rohling eine axiale Vertiefung mit einem den Durchmesser des später einzubringenden Innengewindes übersteigenden Durchmesser eingebracht, um anschließend nur den Gewindebereich unter gleichzeitiger Verformung der Mantelfläche zu einer Schlüsselfläche auf den Gewindekerndurchmesser zu reduzieren. Zur Fertigstellung des in der genannten Schrift beschriebenen Gelenkgehäuses sind anschließend weitere Arbeitsverfahren, wie Anstauchen, Napfen, Lochen, Kalibrieren sowohl der Außenkontur als auch der Innenkontur des Gelenkgehäuses erforderlich. Darüber hinaus ist es notwendig, nach dem Umformvorgang einerseits ein Innengewinde zu schneiden und andererseits eine Ringnut für die Befestigung eines Dichtungsbalges einzudrehen. Zudem sind bei einer derartigen Ausführung keine echten Gewichtseinsparangen zu erwarten.

Des Weiteren wird in der JP 10-034276 A ein Verfahren zur Herstellung eines Kugelgelenkgehäuses offenbart, bei welchem durch Kaltumformung aus einem vorzugsweise aus Stangen- oder Drahtmatereial hergestellten, zur Umformung vorbereiteten Rohling, durch Napfrüekwärtsfließpressen eine axiale Vertiefung mit einem Durchmesser gebildet wird. Dieses Kugelgelcnkgchäuse besteht somit insbesondere im zapfenseiten aus einem Vollmaterial und besitzt damit in nachteiliger Weise ein relativ hohes Gewicht.

Der Erfindung liegt die technische Problemstellung zugrunde, ein Verfahren zur Herstellung eines Kugelgelenkgehäuses bereitzustellen, das es ermöglicht, ein in Leichtbauweise durch Umformvorgänge insgesamt durch Kaltumformung hergestelltes Kugelgelenkgehäuse zu erzeugen.

Diese technische Problemstellung wird durch die Merkmale des Patentanspruches 1 gelöst. Zur Vorbereitung der Umformung des abgetrennten aus Stab- oder Drahtmaterial bestehenden Rohlings ist es im Sinne der Erfindung hilfreich, in diesen zunächst eine muldenförmige Vertiefung zu pressen beziehungsweise die Oberflächen des Rohlings vorzubehandeln, um nachfolgend die Umformverfahren mit höchster Genauigkeit und Qualität durchführen zu können. Durch die erwähnten Vorbereitungshandlungen kann beispielsweise das Zentrieren des Rohlings im Umformwerkzeug erleichtert werden. Der vorbereitete und üblicherweise als Platine bezeichnete Rohling wird zunächst in einem ersten Arbeitsgang mittels Napfrückwärtsfließpressens mit einer ersten axialen Vertiefung ausgestattet, wobei die Axialrichtung durch eine Längsachse des Rohlings definiert ist. Nach Einbringung der ersten axialen Vertiefung mit einem ersten Durchmesser in den Rohling wird in einem weiteren Arbeitsschritt eine zweite axiale Vertiefung ebenfalls durch Napfrückwärtsfließpressen in die zuvor bereits gesetzte erste axiale Vertiefung eingebracht. Die zweite axiale Vertiefung weist einen vergleichsweise zur ersten axialen Vertiefung größeren Durchmesser auf. Somit erfährt die erste axiale Vertiefung eine Aufweitung. Während des zweiten Napfrückwärtsfließpressens erfolgt innerhalb des umzuformenden Kugelgelenkgehäuses eine Materialverformung, die zu einer zumindest abschnittsweisen Durchmesserreduzierung auch der ersten axialen Vertiefung führt.

Durch das Napfrückwärtsfließpressen ist es möglich, sehr dünnwandige metallische Hohlkörper herzustellen. Im vorliegenden erfindungsgemäßen Fall wird dieses Verfahren in zwei aufeinanderfolgenden Arbeitsschritten ausgenutzt, um ein insgesamt durch Kaltumformung erzeugtes Kugelgelenkgehäuse herzustellen, das als Hohlkörper in Leichtbauweise ausgeführt ist. Diese Leichtbauweise ermöglicht Gewichtseinsparungen in bislang nicht bekanntem Umfang. Zudem wird während des Napfrückverärtsfließpressens in Folge der Fließvorgänge des Materials eine Verdichtung desselben realisiert, so daß auch die erforderlichen Festigkeitsanforderungen erfüllt werden.
Die erste axiale Vertiefung bildet mithin in dem später fertiggestellten Kugelgelenkgehäuse einen Hohlraum, während die zweite, später eingebrachte axiale Vertiefung den Lagertopf des Gehäuses bildet, welcher zur Aufnahme der Kugelgelenkbauteile wie der Lagerschale und des darin gelagerten Kugelzapfens vorgesehen ist.

Weitere Ausgestaltungen des erfindungsgemäßen Verfahrens werden in den Unteransprüchen beschrieben.

So kann entsprechend einer Ausgestaltung des erfindungsgemäßen Verfahrens die axiale Länge der zweiten axialen Vertiefung geringer als die verbleibende Länge der ersten axialen Vertiefung ausgeführt sein. Dieser Fall wird vorwiegend bei sehr langen Kugelgelenkgehäusen, wie sie beispielsweise bei Axialgelenken an Spurstangen zum Einsatz kommen, eintreten.

Darüber hinaus ist es während der Durchführung des ersten Napfrückwärtsfließpreßvorganges in einfacher und vorteilhafter Weise möglich, an dem Kugelgelenkgehäuse gleichzeitig einen Axialzapfen anzuformen.
Bei diesem ersten Napfrückwärtsfließpreßvorgang kann das Kugelgelenkgehäuse ferner gleichzeitig mit einer äußeren Schlüsselfläche versehen werden, sodass zusätzliche Arbeitsgänge eingespart werden können und das Kugelgelenkgehäuse sehr kostengünstig erzeugbar ist. Die Schlüsselfläche dient später beim Einbau des Kugelgelenkgehäuses in das Kraftfahrzeug dazu, beispielsweise ein Werkzeug anzusetzen. Allerdings ist es natürlich ebenso denkbar, die Schlüsselfläche erst während des zweiten Napfrückwärtsfließpreßvorganges anzuformen.

Der Axialzapfen weist gemäß einer Ausgestaltung des erfindungsgemäßen Verfahrens ein Gewinde auf, welches an dem Axialzapfen angeformt, beispielsweise also gerollt wird oder in den Axialzapfen eingeschnitten werden kann.

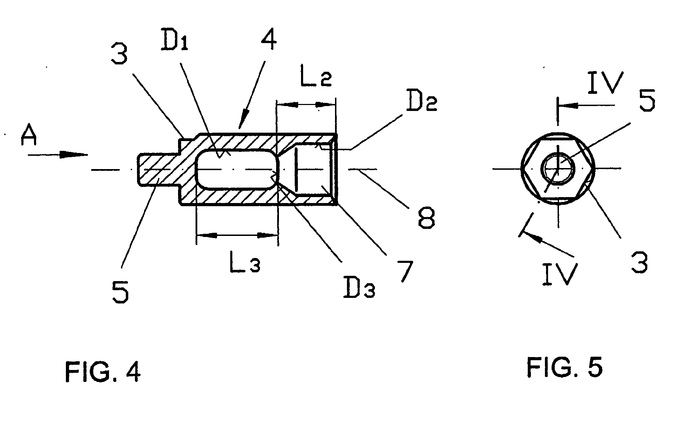

Die nachfolgende Beschreibung des erlvndungsgemäßen Verfahrens soll anhand eines Ausführungsbeispieles mittels eines Stadienplanes veranschaulicht werden, wie er den Figuren I - 4 entnehmbar ist. In der Figur 5 ist ferner eine Ansicht eines Kugelgelenkgehäuses entsprechend der Pfeilrichtung A in Figur 4 zu sehen.
In der Figur 5 wurde darüber hinaus der Schnittverlauf IV-IV eingezeichnet, der der Darstellung der Figur 4 entspricht.

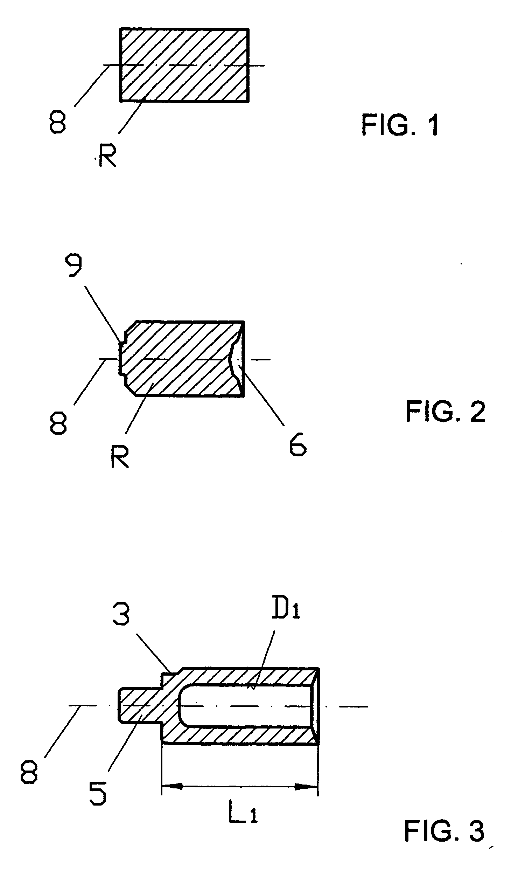

Bei dem erfindungsgemäßen Verfahren wird ein Rohling R, wie er in Figur 1 dargestellt ist, verwendet. Dieser Rohling R besteht aus Stab- oder Drahtmaterial. Er weist dementsprechend einen zylinderförmigen Querschnitt auf. Seine Längsachse 8 bildet vorliegend auch die Mittenachse des späteren Kugelgelenkgehäuses.

Zur Vorbereitung des Rohlings wird neben bekannten Oberflächenbehandlungen, die für die weitere Bearbeitung erforderlich sein können, zunächst die in Figur 2 gezeigte Platine R hergestellt. Diese Platine weist einerseits eine plan bearbeitete Fläche 9 und dieser gegenüberliegend eine Mulde 6 auf, sodass insgesamt Angriffsflächen für die Werkzeuge geschaffen worden sind. In Abhängigkeit von den geometrischen Abmessungen des Rohlings R kann ferner ein Rekristallisationsglühen des Rohlings erforderlich sein. Dieses wird eingesetzt, um die Werkstoffeigenschaften zu verbessern und ist nicht bei jedem Kugelgelenkgehäuse zwingend vorzusehen.
Zu Beginn des erfindungsgemäßen Verfahrens zur Bearbeitung des Rohlings R wird, wie dies aus der Figur 3 hervorgeht, mittels eines Napfrückwärstließpressverfahrens eine erste axiale Vertiefung 1 in den Rohling R eingebracht. Diese erste axiale Vertiefung 1 weist einen ersten Durchmesser D1 sowie eine erste axiale Länge L1 auf. An der Außenoberfläche des Rohlings R werden während des ersten Napfrückwärtsfließpreßverganges zeitgleich eine Schlüsselfläche 3 sowie ein Axialzapfen 5 angeformt. Bereits im nächsten Arbeitsschritt, wie er in Figur 4 gezeigt ist, erfolgt die endgültige Fertigstellung des erfindungsgmäßem Kugelgelenkgehäuses 4.
Dementsprechend wird in einem zweiten Napfrückwärtsfließpreßvorgang in die erste axiale Vertiefung 1 eine zweite axiale Vertiefung 2 eingebracht, welche einen Durchmesser D2 aufweist, der verglichen mit dem Durchmesser D1 der ersten axialen Vertiefung vergrößert ist. Darüber hinaus weist die zweite axiale Vertiefung 2 eine Länge L2 auf, welche in dem dargestellten Beispiel geringer ist, als die verbleibende Länge L3 der ersten axialen Vertiefung. Zwischen der ersten und der zweiten axialen Vertiefung bildet sich durch Materialverformung ein im Durchmesser reduzierter Abschnitt aus, dessen Innendurchmesser D3 sehr gering ist. Der dadurch in dem Kugelgelenkgehäuse 4 entstandene Lagertopf 7 dient später der Aufnahme der Lagerschale zur Lagerung der Gelenkkugel eines Kugelgelenkzapfens. Die Materialverformung auf den Durchmesser D3 erfolgt ausschließlich im Innenraum des Kugelgelenkgehäuses 4, sodass der Außendurchmesser während der Umformung nahezu konstant bleibt.

Die Figur 5 zeigt noch einmal eine Ansicht in Pfeilrichtung A entsprechend der Darstellung in Figur 4, woraus der Axialzapfen 5 und die am Außenumfang des Kugelgelenkgehäuses 4 angeformte Schlüsselfläche 3 ersichtlich sind.

### Bezugszeichenliste:

- 1: Erste axiale Vertiefung
- 2: Zweite axiale Vertiefung
- D1: erster Durchmesser
- D2: zweiter Durchmesser
- D3: dritter Durchmesser
- L 1: erste Länge
- L2: zweite Länge
- R: Rohling
- 3: Schlüsselfläche
- 4: Kugelgelenkgehäuse
- 5: Axialzapfen
- 6: Mulde
- 7: Lagertopf
- 8: Längsachse
- 9: Fläche

## Patentansprüche

1. Verfahren zur Herstellung eines Kugelgelenkgehäuses (4) durch Kaltumformung aus einem vorzugsweise aus Stangen- oder Drahtmaterial hergestellten, zur Umformung vorbereiteten Rohling (R), in den zunächst durch Napfrückwärtsfließpressen eine erste axiale Vertiefung (1) mit einem Durchmesser (D1),
**dadurch gekennzeichnet dass**,
anschließend durch Napfrückwärtsfließpressen in diese erste axiale Vertiefung (1) eine zweite axiale Vertiefung (2) mit einem vergleichsweise größeren Durchmesser (D2) eingebracht wird, wobei während des zweiten Napfrückwärtslüeßpressens durch Materialverformung eine abschnittsweise Durchmesserreduzierung (D3) auch der ersten axialen Vertiefung (1) gebildet wird und wobei die erste axiale Vertiefung (1) einen Hohlraum in dem fertiggestellten Kugelgelenkgehäuse (4) und die zweite axiale Vertiefung (2) einen Lagertopf (7) des Kugelgelenkgehäuses (4) zur Aufnahme von Kugelgelenkbauteilen bildet.

2. Verfahren zur Herstellung eines Kugelgelenkgehäuses nach Anspruch 1,
**dadurch gekennzeichnet, dass**
die axiale Länge (L2) der zuletzt geformten, zweiten axialen Vertiefung (2) geringer als die verbleibende Länge (L3) der ersten axialen Vertiefung (1) ist.

3. Verfahren zur Herstellung eines Kugelgelenkgehäuses nach Anspruch 1 oder 2,
**dadurch gekennzeichnet, dass**
während des ersten Napfrückwärtsfließpressvorganges gleichzeitig ein Axialzapfen (5) an dem Kugelgelenkgehäuse (4) angeformt wird.

4. Verfahren zur Herstellung eines Kugelgelettkgehäuses nach einem der vorstehend genannten Ansprüche,
**dadurch gekennzeichnet, dass**
während eines der Napfrückwärtsfließpressvorgänge, vorzugsweise während des ersten Napfrückwärtsfließpressvorganges gleichzeitig eine äußere Schlüsselfläche (3) an dem Kugelgelenkgehäuse (4) angeformt wird.

5. Verfahren zur Herstellung eines Kugelgelenkgehäuses nach Anspruch 3,
**dadurch gekennzeichnet, dass**
an dem Axialzapfen (5) ein Gewinde angeformt oder in den Axialzapfen eingeschnitten wird.

## Claims

1. Method for manufacturing a ball-and-socket joint housing (4) by cold forming from a blank (R) preferably produced from bar stock or wire material and prepared for forming, into which blank a first axial recess (1) with a diameter (D1) is first introduced by backward can extrusion, **characterized in that** a second axial recess (2) with a comparatively larger diameter (D2) is then introduced by backward can extrusion into this first axial recess (1), a section-wise diameter reduction (D3) of the first axial recess (1) also being formed by material deformation during the second backward can extrusion and the first axial recess (1) forming a cavity in the finished ball-and-socket joint housing (4) and the second axial recess (2) forming a bearing pot (7) of the ball-and-socket joint housing (4) for receiving ball-and-socket joint parts.

2. Method for manufacturing a ball-and-socket joint housing according to claim 1, **characterized in that** the axial length (L2) of the last formed, second axial recess (2) is shorter than the remaining length (L3) of the first axial recess (1).

3. Method for manufacturing a ball-and-socket joint housing according to claim 1 or 2, **characterized in that** during the first backward can extrusion process an axial pin (5) is formed at the same time on the ball-and-socket joint housing (4).

4. Method for manufacturing a ball-and-socket joint housing according to one of the aforesaid claims, **characterized in that** during one of the backward can extrusion processes, preferably during the first backward can extrusion process, an external key surface (3) is formed at the same time on the ball-and-socket joint housing (4).

5. Method for manufacturing a ball-and-socket joint housing according to claim 3, **characterized in that** a thread is formed on the axial pin (5) or is cut into the axial pin.

## Revendications

1. Procédé de fabrication d'un boîtier d'articulation à rotule (4) par déformation à froid à partir d'une pièce brute (R) préparée pour la déformation à froid, de préférence découpée dans une barre ou dans un fil métallique, dans laquelle on façonne d'abord une première cavité axiale (1) d'un diamètre (D1) par filage en godet avec remontée de matière,
**caractérisé en ce qu'**ensuite, une deuxième cavité axiale (2) présentant un diamètre (D2) relativement plus grand est façonnée dans cette première cavité axiale, par filage en godet avec remontée de matière, une réduction d'un diamètre (D3) étant également réalisée pendant la deuxième opération de filage en godet avec remontée de matière, par déformation de matière, dans une section de la première cavité axiale (1), et la première cavité axiale (1) définissant une partie creuse dans le boîtier d'articulation à rotule fini (4), et la deuxième cavité axiale (2) définissant une coupelle de palier (7) du boîtier d'articulation à rotule (4), qui est destinée à recevoir des composants de l'articulation à rotule.

2. Procédé de fabrication d'un boîtier d'articulation à rotule selon la revendication 1, **caractérisé en ce que** la longueur axiale (L2) de la deuxième cavité axiale (2) est inférieure à la longueur restante (L3) de la première cavité axiale (1).

3. Procédé de fabrication d'un boîtier d'articulation à rotule selon la revendication 1 ou 2, **caractérisé en ce qu'**un tenon axial (5) est conformé simultanément sur le boîtier d'articulation à rotule (4) pendant la première opération de filage en godet avec remontée de matière.

4. Procédé de fabrication d'un boîtier d'articulation à rotule selon l'une des revendications précédentes, **caractérisé en ce que**, pendant l'une des opérations de filage en godet avec remontée de matière, de préférence pendant la première opération de filage en godet avec remontée de matière, une surface (3) d'engagement d'un outil est en même temps conformée sur le boîtier d'articulation à rotule (4).

5. Procédé de fabrication d'un boîtier d'articulation à rotule selon la revendication 3, **caractérisé en ce qu'**un filetage est formé sur le tenon axial (5) ou taraudé dans le tenon axial.
